# EUROPÄISCHE PATENTSCHRIFT

(11) **EP 1 013 672 B1**
(45) Veröffentlichungstag und Bekanntmachung des Hinweises auf die Patenterteilung: **08.05.2002**
(21) Anmeldenummer: 99124692.7
(22) Anmeldetag: 11.12.1999
(51) Int. Cl.: C08F 8/06, C08F 10/00

(54) **Polymeroxidate und ihre Verwendung**
Polymer oxidates and their use
Polymères oxidés et leur utilisation

(30) Priorität: 24.12.1998 DE 19860174
(43) Veröffentlichungstag der Anmeldung: 28.06.2000
(73) Patentinhaber: Clariant GmbH, 65929 Frankfurt am Main (DE)
(72) Erfinder: Herrmann, Hans-Friedrich, Dr., 64521 Gross-Gerau (DE); Hohner, Gerd, Dr., 86368 Gersthofen (DE)

(56) Entgegenhaltungen:
- EP-A- 0 498 417
- EP-A- 0 571 882
- EP-A- 0 602 509
- DE-A- 19 617 230
- US-A- 4 132 691
- US-A- 4 661 163

## Beschreibung

Die Erfindung bezieht sich auf Polymeroxidate mit verbesserter Dispergierbarkeit in wässrigen Medien, deren Herstellung durch oxidativen Abbau von Polyethylen-Kunststoff und deren Verwendung.

Die Erfindung bezieht sich insbesondere auf Polymeroxidate mit verbesserter Dispergierbarkeit in wässrigen Medien, hergestellt durch Oxidation von hochmolekularem Polyethylen einer gewichtsmittleren Molmasse Mw größer 40000 g/mol hergestellt mittels Metallocen-Katalysatorsystemen und der Anwendung dieser Polymeroxidate.

Kunststoffartige Homo- und Copolymere des Ethylens können durch gezielten oxidativen Abbau zu polaren Produkten umgesetzt werden. Derartige Polymeroxidate enthalten sauerstoffhaltige Funktionen wie z.B. Carboxyl-, Esterund Ketogruppen und eignen sich aufgrund der dadurch bedingten Polarität beispielsweise zur Herstellung wässriger Dispersionen für Anwendungen etwa im Pflegemittel- oder technischen Bereich. Polyethylenoxidate dienen weiterhin als Hilfsmittel zur Verarbeitung und Formgebung von Kunststoffen (vgl. Ullmann's Encyclopedia of Industrial Chemistry, 5. Aufl., Vol. A 28, S. 155-156, Weinheim 1996).

Verfahren zum oxidativen Abbau von Polyethylenkunststoff sind bekannt. Beispielsweise kann hierzu der Rohstoff unterhalb seines Erweichungspunktes in feinverteiltem Zustand mit Sauerstoff oder sauerstoffhaltigen Gasen behandelt werden (DE-A-1 520 008). In Variation dieser Arbeitsweise kann die Umsetzung auch in Gegenwart eines inerten Dispergiermittels wie z.B. Wasser erfolgen (DE-A-3 238 652). Weiterhin wurde der oxidative Abbau von Ethylenhomo- und -Copolymeren bei Temperaturen oberhalb des Erweichungspunktes in Gegenwart eines inerten Dispergiermittels beschrieben (DE-A-2 035 706, EP-A-28 384). Die Herstellung des für die Oxidation eingesetzten Polyethylens erfolgt durch Ethylenpolymerisation mit Hilfe von Titan- bzw. Chrom-Übergangsmetallkatalysatoren im Niederdruckverfahren oder nach dem radikalischen Hochdruckverfahren.

Bekannt ist daneben die Oxidation von niedermolekularen Polyethylenwachsen zu Wachsoxidaten. Diese werden durch Begasen des schmelzflüssigen Rohstoffs mit sauerstoffhaltigen Gasen gewonnen. Aufgrund der niedrigen Viskosität des Ausgangsmaterials ist hier der Zusatz eines Dispergiermittels nicht erforderlich. Die Oxidation von Polyethylenwachsen, deren gewichtsmittlere Molmasse unterhalb von 40000 g/mol, in der Regel unterhalb von 10000 g/mol liegt, führt zu andersartigen Produkten als die von hochmolekularem, kunststoffartigem Polyethylen. Wachsoxidate sind niedrigermolekular und weicher als Polymeroxidate, sie sind beispielsweise bei der Anwendung in Fußbodenpflege-Rezepturen hinsichtlich Härte und Begeheigenschaften den Polymeroxidaten unterlegen. Wachsoxidate sind beispielsweise aus DE-A-1 227 654 bekannt.

DE-A-196 17 230 beschreibt oxidierte Wachse ausgehend von Polyolefinen mit einem Molekulargewicht Mw von 1.000 bis 40.000 g/mol.

EP-A-0 571 882 beschreibt ein Verfahren zur Herstellung von Polyolefinwachsen (Molmasse Mw ca. 500 bis 50.000 g/mol), aber keine Oxidation derselben.

EP-A-0 602 509 beschreibt ebenfalls ein Verfahren zur Herstellung von Polyolefinwachsen (Molmasse Mw ca. 500 bis 50.000 g/mol) und ebenso keine Oxidation dieser Polyolefinwachse.

Wäßrige Dispersionen, die mit den vorgenannten Polymeroxidaten hergestellt werden, weisen in der praktischen Anwendung oft Nachteile auf, wie zu geringe Transparenz, zu hohe Viskosität, verminderter Glanz nach Filmauftrag oder mangelhafte Lagerstabilität.

Es bestand somit die Aufgabe, Polymeroxidate mit verbesserten Dispergier- und Anwendungseigenschaften zur Verfügung zu stellen, die nicht die Nachteile der bisher bekannten Polymeroxidate aufweisen.

Es wurde nun überraschenderweise gefunden, daß Polymeroxidate mit verbesserten Eigenschaften erhalten werden, wenn das als Ausgangsmaterial verwendete hochmolekulare Polymer mit Hilfe von Metallocenkatalysatoren hergestellt wurde.

Gegenstand der Erfindung sind somit Polymeroxidate, dadurch gekennzeichnet, daß ein Ausgangspolymer, das ein mittels Metallocenkatalysatoren gewonnenes Polyethylen mit einer gewichtsmittleren Molmasse größer oder gleich 50.000 g/mol darstellt, durch Umsetzung mit Sauerstoff oder Sauerstoff enthaltenden Gasgemischen oxidiert wird.

### Ausgangspolymer:

Polymerisationsverfahren zur Herstellung von Polyethylen mit Hilfe von Metallocenkatalysatorsystemen sind bekannt. Neben einer Beschreibung des Suspensionsverfahrens in EP-A-578 838 gibt es Ausarbeitungen für das Gasphasenverfahren z.B. in EP-A-323 716 und das Hochdruckverfahren z.B. in EP-A-361 866.

Als Ausgangspolymer eignen sich mit Metallocenkatalysatoren hergestellte Polyethylene, worunter Ethylenhomo-, Co- oder Terpolymerisate zu verstehen sind, mit gewichtsmittleren Molmassen Mw größer oder gleich 50.000 g/mol, bevorzugt zwischen 50.000 und 4.000.000 g/mol. Die Schmelzviskositäten solcher Polymeren, gemessen bei 140°C, liegen oberhalb 50.000 mPa.s, üblicherweise oberhalb 100 Pa.s. Der bei Polymeren als Meßgröße für die Viskosität gebräuchliche Schmelzindex MFR 190/5 ist kleiner als 100 g/10 min, üblicherweise kleiner oder gleich 50 g/10 min.

Dieses Ausgangspolymer kann neben Ethylen auch α-Olefine der Kettenlängen 3 bis 30, vorzugsweise 3 bis 8, wie z.B. Propen, 1-Buten, 1-Hexen, 1-Octen in einer Menge von 0,1-20 Gew.-%, bezogen auf Gesamtpolymer, enthalten. Besonders bevorzugt sind Ethylencopolymere mit bis zu 10 Gew.-% Propen oder 1-Buten.

Das bevorzugt verwendete Ausgangspolymer besitzt eine enge Molmassenverteilung M_{w}/Mₙ kleiner als 5, bevorzugt kleiner als 4, insbesondere kleiner oder gleich 3,5.

### Herstellung des Ausgangspolymers:

Katalysatorsysteme zur Herstellung des Ausgangspolymers bestehen aus einer oder mehreren Metallocen-Verbindungen (I) zusammen mit einem Cokatalysator (II) sowie optional einer weiteren Katalysatorkomponente (III) und einem Scavenger (IV). Das Katalysator-System wird häufig auf einem Träger fixiert eingesetzt, wobei die polymerisationsaktive Spezies durch Variation der Reihenfolge der Komponenten (I) bis (IV) und Träger entweder vor, während oder nach der Trägerung entsteht.

Die Metallocen-Verbindung (I) entspricht typischerweise der Formel I 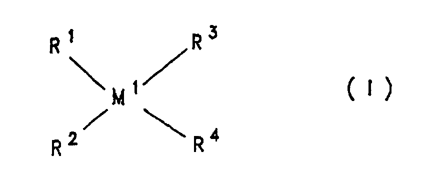 und umfaßt beispielsweise Strukturen der Formeln (Ia ): 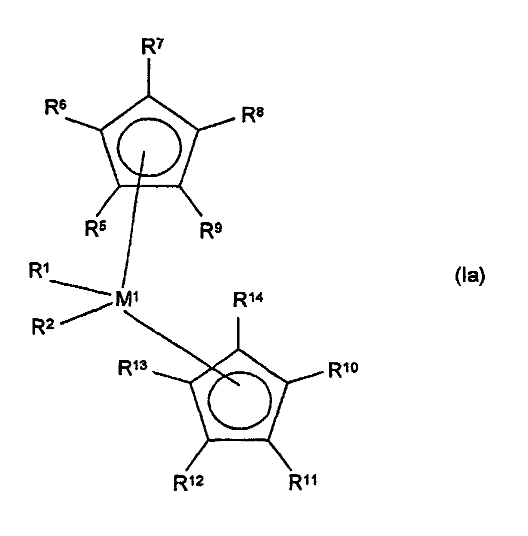 der Formel Ib: 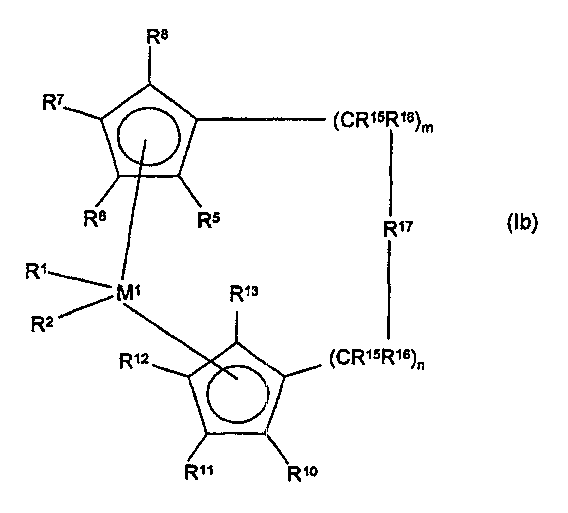 oder der Formel Ic:

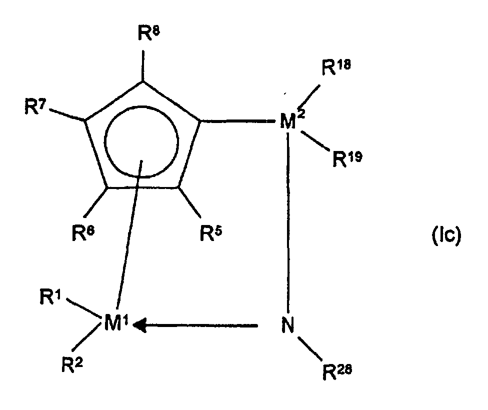

In den Formeln ist M¹ ein Metall der Gruppe IVb, Vb, Vlb oder VIIIb des Periodensystems, beispielsweise Titan, Zirkon, Eisen, Chrom, Cobalt, Nickel.

R¹ und R² sind gleich oder verschieden und bedeuten ein Wasserstoffatom, eine C₁-C₁₀-Alkylgruppe, eine C₁-C₁₀-Alkoxygruppe, eine C₆-C₁₀-Arylgruppe, eine C₆-C₁₀-Aryloxygruppe, eine C₂-C₁₀-Alkenylgruppe, eine C₇-C₄₀-Arylalkylgruppe, eine C₇-C₄₀-Alkylarylgruppe, eine C₈-C₄₀-Arylalkenylgruppe oder ein Halogenatom.

R³ und R⁴ sind gleich oder verschieden und in den Ausführungen der Formeln (la) bis ( Ic ) beschrieben oder sind Alkyl, Pyridyl, Arylalkyl, Alkylaryl, Mono- und Bisalkylpyridyl substituierte Imido-Reste welche über Alkyl, Bisalkylaryl oder Bisalkylpyridyl-Gruppen miteinander verbrückt sein können. Einer der Reste R³ und R⁴ kann des weiteren ein substituiertes Stickstoffatom sein, wobei R²⁸ die Bedeutung von R²¹ hat und vorzugsweise Methyl, t-Butyl oder Cyclohexyl ist.

R⁵ bis R¹⁴ sind gleich oder verschieden und bedeuten unabhängig voneinander ein Wasserstoffatom, ein Halogenatom, eine C₁-C₁₈-Arylgruppe, eine C₁-C₁₀-Alkoxygruppe, einen -NR²⁰₂-, -SR²⁰-, -OSiR²⁰₃-, -SiR²⁰₃-, oder -PR²⁰₂-Rest, worin R²⁰ eine C₁-C₁₀-Alkylgruppe oder C₆-C₁₀-Arylgruppe, oder im Falle Si oder P enthaltender Reste auch ein Halogenatom, oder je zwei benachbarte Reste R⁵, R⁶, R⁷, R⁸, R⁹, R¹⁰, R¹¹, R¹², R¹³ oder R¹⁴ bilden mit den sie verbindenden C-Atomen ein Ringsystem. Beispiele sind 2-Methyl-4-naphthyl-indenyl oder substituiertes Benzoindenyl bzw. Fluorenyl. Bevorzugte Substituenten dieser Liganden sind in der Beschreibung von R¹ enthalten.

R¹⁷ ist: 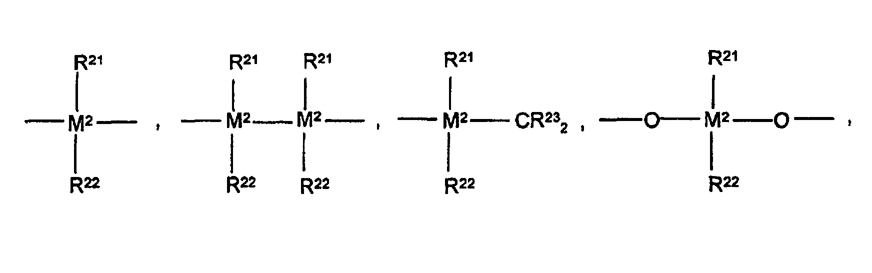 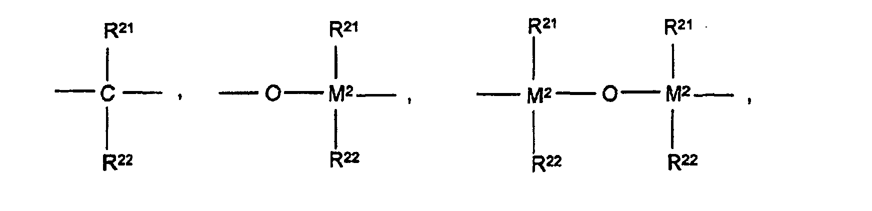 =BR²¹, =AlR²¹, -Ge-, -Sn-, -O-, -S-, =SO, =SO₂, =NR¹⁹, =CO, =PR¹⁹ oder =P(O)R¹⁹, wobei R²¹, R²² und R²³ gleich oder verschieden sind und ein Wasserstoffatom, ein Halogenatom, eine C₁-C₃₀-Alkylgruppe, eine C₁-C₁₀-Fluoralkylgruppe, eine C₆-C₁₀-Fluorarylgruppe, eine C₆-C₁₀-Arylgruppe, eine C₁-C₁₀-Alkoxygruppe, eine C₂-C₁₀-Alkenylgruppe, eine C₇-C₄₀-Arylalkylgruppe, eine C₈-C₄₀-Arylalkenylgruppe oder eine C₇-C₄₀-Alkylarylgruppe bedeuten, oder R²¹ und R²² oder R²¹ und R²³ bilden jeweils zusammen mit den sie verbindenden Atomen einen Ring mit 2 bis 8 Ringkohlenstoffatomen.

M² ist Silizium, Germanium oder Zinn, bevorzugt Silizium. R¹⁷ ist vorzugsweise =CR²¹R²², =SiR²¹R²², =GeR²¹R²², -O-, -S-, =SO, =PR²¹ oder =P(O)R²¹.
R¹⁵ und R¹⁶ sind gleich oder verschieden und haben die für R²¹ genannte Bedeutung.
m und n sind gleich oder verschieden und bedeuten 0, 1 oder 2.
R¹⁸ und R¹⁹ haben die Bedeutung von R²¹ und R²².

Erläuternde Beispiele für Metallocene sind:
Bis(1-n-butyl-3-methyl-cyclopentadienyl)zirkoniumdichlorid,
Bistetrahydroindenylzirkoniumdimethyl,
Dimethylsilyl-bis-1-(2-methyl-4,5-benzoindenyl)zirkoniumdibenzyl,
Dimethylsilyl-bis-1-(2-methyltetrahydroindenyl)zirkoniumdichlorid,
Ethylen-bis-1-(2-methyl-4-phenylindenyl)zirkoniumdichlorid,
Ethylen-bis-1-(tetrahydroindenyl)zirkoniumdichlorid,
Isopropyliden(1-indenyl)(cyclopentadienyl)zirkoniumdichlorid,
lsopropyliden(9-fluorenyl)(cyclopentadienyl)zirkoniumdichlorid,
(tert.-Butylamido)dimethyl(tetramethylcyclopentadienyl)silyltitaniumdimethyl,
2, 6-bis[1-(2-tert-Butylphenylimino)ethyl]pyridineisendichlorid,
2, 6-bis[(2, 6-di-iso-Propylphenylimino)methyl]pyridincobaltdichlorid

Geeignete Cokatalysatoren (II) sind aluminiumorganische Verbindungen, insbesondere Alumoxane oder auch aluminiumfreie Systeme wie R²⁶ₓNH₄₋ₓBR²⁷₄, R²⁶ₓPH₄₋ₓBR²⁷₄, R²⁶₃CBR²⁷₄ oder BR²⁷₃. In diesen Formeln bedeutet x eine Zahl von 1 bis 4, die Reste R²⁶ sind gleich oder verschieden und bedeuten C₁-C₂₀-Alkyl oder C₆-C₁₂-Aryl, oder zwei Reste R²⁶ bilden zusammen mit dem sie verbindenden Atom einen Ring mit 2 bis 8 Ringkohlenstoffatomen. Die Reste R²⁷ sind gleich oder verschieden und stehen für Aryl, das durch Alkyl, Haloalkyl oder Halogen substituiert sein kann. Beispielsweise steht R²⁶ für Ethyl oder Phenyl und R²⁷ für Pentafluorphenyl. Eine Aktivierung gelingt generell mit Alumoxanen, hergestellt durch gezielte Hydrolyse von Trialkylamiminium-Verbindungen oder deren Gemische, insbesondere mit Methylaluminoxan.

Die Komponente (III) ist ein zyklisches Boroxin der Formel (R²¹BO)₃, wie beispielsweise Trimethylboroxin, wobei die Reste R²¹ voneinander auch verschieden sein können. Anstelle dessen können auch weitere Verbindungen vom Typ (II) verwendet werden, um die Aktivität des Katalysatorsystems zu erhöhen.

Zusätzlich kann ein Scavenger (IV) verwendet werden, um einen Schutz des Polymerisationssystems vor polaren Katalysatorgiften aufrechtzuerhalten. Hierzu sind alle aluminiumorganischen Verbindungen wie z.B. Triethylaluminium, Triisobutylaluminium sowie Mischungen daraus geeignet.

### Oxidation des Ausgangspolymers:

Die Oxidation wird so geführt, daß die gewonnenen Polymeroxidate Säurezahlen zwischen 0,5 und 200 mg KOH/g und Schmelzviskositäten bei 140°C zwischen 50 und 20000 mPa.s, bevorzugt zwischen 100 und 20000 mPa.s besitzen.

Der oxidative Abbau des hochmolekularen Ausgangspolymers erfolgt durch Einwirkung von Sauerstoff oder sauerstoffhaltigen Gasen, bevorzugt Luft, mindestens bei Atmosphärendruck. Es kann dabei unterhalb oder oberhalb des Erweichungspunktes des Polymeren gearbeitet werden. In letzterem Fall ist in der Regel die Gegenwart eines inerten Dispergiermittels, beispielsweise Wasser, erforderlich, um die für eine rasche Reaktion ausreichend große Phasengrenzfläche zwischen der Polymerschmelze und dem oxidierenden Agens zu gewährleisten. Wird unterhalb des Erweichungspunktes oxidiert, so verläuft die Reaktion mit geringerer Geschwindigkeit, jedoch kann dann auf den Zusatz und die nachfolgende Wiederabtrennung von Dispergiermittel verzichtet werden. Der Fortgang der Umsetzung kann anhand der Säurezahl verfolgt werden. Als "Starthilfe" für die Reaktion können geringe Mengen von bereits oxidiertem Polyethylen zugegeben werden.

Der oxidative Abbau zu Polymeroxidaten kann durch eine Vorbehandlung des Polymers mit Peroxid oder Azoverbindungen wie z.B. 2,2'-Azo-bis-(2-methylpropionsäurenitril) oder durch eine oxidative Plasmabehandlung zusätzlich gefördert werden. Bei der Auswahl der Rohstoffe sind unstabilisierte Polymere oder solche mit einem geringen Anteil an Antioxidantien zu bevorzugen.

Die gezielte Zugabe von Säuren, Basen oder Puffer-Substanzen kann die Reaktionszeit verkürzen und Vernetzungsreaktionen vermeiden. Die Polymeroxidation läßt sich kontinuierlich oder diskontinuierlich durchführen.

### Verwendung der Polymeroxidate:

Ein weiterer Gegenstand der vorliegenden Erfindung ist die Verwendung des erfindungsgemäßen Polymeroxidats zur Herstellung von wässrigen Dispersionen, als Zusatz bei der Pigmentdispergierung z.B. in Masterbatches, zur Oberflächenmodifizierung oder zur polaren Modifizierung von Polyolefinen. Ein weiteres vorteilhaftes Einsatzgebiet ist die Verwendung als Gleitmittel zur Kunststoffverarbeitung.

Die Polymeroxidate können unter Verwendung von Hilfsstoffen wie ionischen oder nichtionischen Emulgatoren, Basen wie Alkalihydroxiden oder Ammoniak oder Aminen und weiteren Zusätzen zu wäßrigen Dispersionen verarbeitet werden. Qualitätskriterien für derartige Dispersionen sind u.a. Viskosität, Lagerstabilität bei erhöhter Temperatur, Transparenz sowie der Glanz der nach Auftragen der Dispersionen auf glatten Flächen sich ausbildenden Filme.

Weiterhin ist die Derivatisierung der funktionellen Gruppen des Polymeroxidats durch Reaktionen an den Carboxyl-, Ester- und Ketogruppen möglich. Hierdurch entstehen Additive, welche zur Oberflächenmodifizierung, Pigmentdispergierung oder Compatibilizer bei Polymer Blends vorteilhafte Anwendung finden.

### Beispiele:

Die Erfindung wird anhand der folgenden Ausführungsbeispiele näher erläutert:

Der Schmelzindex wird bestimmt nach ISO 1133 mit einem Gerät der Fa. Göttfert. Das Molmassengewichtsmittel M_{w} ,das Molmassenzahlenmittel Mₙ und der resultierende Quotient M_{w}/Mₙ werden ermittelt mittels Gelpermeationschromatographie bei 135°C in 1,2-Dichlorbenzol. Die Schmelzviskositäten wurden nach DIN 51562 mit einem Rotationsviskosimeter, die Tropfpunkte nach DIN 51801/2, die Säurezahlen nach DIN 53402 und die Dichten nach DIN 53479 bei 20°C bestimmt. Die Bestimmung der Viskosität der wässrigen Dispersionen erfolgte unter Verwendung eines Auslaufbechers nach DIN 53211. Glanzmessungen an Filmen wurden mit einem Gerät des Typs Micro-TRI-gloss/Byk Gardner GmbH durchgeführt.

Synperonic 91/4®, Synperonic 91/5® sind Emulgatoren der Fa. ICI, Genapol UD 080® ist ein Emulgator der Firma Clariant GmbH.

Herstellung und Charakterisierung der hochmolekularen Ausgangspolymere:

Grundsätzlich sind alle mit Metallocen-Katalysatoren hergestellten Ethylenhomooder Copolymere geeignet. Die technische Ausführung der Polymerisation ist unerheblich.
Für die Herstellung der Polymeroxidate wurden folgende Rohstoffe eingesetzt:

**Tabelle 1a:**

| Metallocen-Polyethylene | | | | | | |
|---|---|---|---|---|---|---|
| Rohstoff | Metallocen | M_{w} | M_{w}/Mₙ | MFR190/5 | Dichte | Comonomer |
| Nr.1 | Bis(n-butyl-3-methy)-cyclopentadienyl)-zirkondichlorid | 54000 | 2,8 | 19 | 0,958 | - |
| Nr. 2 | Dimethylsilylbis(tetrahydroindenyl)-zirkondichlorid | 71000 | 3,4 | 12 | 0,949 | Propen |
| | | g/mol | | g/10 min | G/cm³ | |

**Tabelle 1b:**

| Ziegler-Polyethylene (für die Vergleichsbeispiele): | | | | | | |
|---|---|---|---|---|---|---|
| Rohstoff | Typ | M_{w} | M_{w}/Mₙ | MFR190/5 | Dichte | Comonomer |
| Nr. 3 | Hostalen GA 7260 | 56000 | 4,7 | 53 | 0,957 | - |
| Nr. 4 | Hostalen GB 7250 | 68100 | 5,2 | 24 | 0,950 | Propen |
| | | g/mol | | 9/10 min | g/cm³ | |

### Herstellung der Polymeroxidate

### Beispiele 1 bis 3; Vergleichsbeispiele 1 bis 3

5,0 kg der in den Tabellen 1a/b aufgeführten Ausgangspolymere, 20 l Wasser und 300 g eines oxidierten Polyethylens mit einer Säurezahl von 60 mg KOH/g wurden in einem Druckgefäß erhitzt. Nach Erreichen einer Innentemperatur von 140°C wurden in das Gemisch unter Rühren und einem konstanten Druck von 15 bar 2000 l/h vorgewärmte Luft eindosiert. Der erzielte Oxidationsgrad wurde durch Probenahmen verfolgt. Nach Erreichen der gewünschten Säurezahl wurde die Luftzufuhr unterbrochen und das Rührwerk abgestellt. Nach erfolgter Phasentrennung wurde das Dispergierwasser über das Bodenventil abgetrennt und die im Kessel verbleibende Wachsschmelze durch Abdestillieren des Restwassers getrocknet. Die Schmelze wurde in Schalen abgelassen. An den Produkten wurden die folgenden Kenndaten bestimmt:

**Tabelle 2:**

| Kenndaten der Polymeroxidate | | | | |
|---|---|---|---|---|
| Beispiel | Rohstoff (aus Tab, 1a/b) | Säurezahl mg KOH/g | Schmelzvisk./140°C [mPas] | Tropfpunkt [°C] |
| 1 | Nr.1 | 16 | 2380 | 124 |
| 2 | Nr. 1 | 23 | 810 | 122 |
| 3 | Nr. 2 | 17 | 3800 | 125 |
| | | | | |
| Vergleichsbeispiel 1 | Nr. 3 | 17 | 1820 | 123 |
| Vergleichsbeispiel 2 | Nr. 3 | 27 | 835 | 120 |
| Vergleichsbeispiel 3 | Nr. 4 | 16 | 2450 | 122 |

### Herstellung von wäßrigen Dispersionen

### Beispiele 4, 5; Vergleichsbeispiele 4, 5

Ein Gemisch aus 280 g Polymeroxidat, 644 g entsalztem Wasser, 45,0 g Synperonic 91/4, 20,0 g Synperonic 91/5, 7,0 g Diethylaminoethanol, 2,0 g Kaliumhydroxid (86 %ig) und 2,0 g Natriumsulfit wurde in einem mit Rührer, Thermometer und Mantelbeheizung ausgestattetem 1 l-Druckgefäß aufgeheizt. Nach Erreichen von 90°C Innentemperatur wurde der Rührer eingeschaltet (150 Upm). Man erhitzte weiter auf 143°, hielt diese Temperatur unter weiterem Rühren 20 min an und kühlte den Kesselinhalt innerhalb von 40 min auf ca. 30°C ab. Die erhaltene Dispersion (35% Festkörperanteil) zeigt die in Tabelle 3 aufgeführten Eigenschaften. Erkennbar ist die Überlegenheit der aus Metallocen-Polyethylen hergestellten Dispersionen hinsichtlich Transparenz und Viskosität bzw. Lagerstabilität.

**Tabelle 3**

| Beispiel | Polymeroxidat | Transparenz der Dispersion (0,1%, 1 cm-Küvette) % | Glanz des Filmauftrags/% (Meßwinkel 20/60°) % | Viskosität der Dispersion (Durchlaufzeit 4 mm DIN-Becher) sec | | Konsistenz der Dispersion nach 1-wöchiger Lagerung bei 50°C |
|---|---|---|---|---|---|---|
| | | | | unverdünnt (35% Feststoffgehalt) | verdünnt auf 30% Feststoffgehalt | |
| 4 | Beispiel 1 | 63 | 82/90 | 56 | 17 | flüssig |
| 5 | Beispiel 3 | 65 | 83/91 | 38 | 13 | flüssig |
| Vergleichsbeispiel 4 | Vergleichsbeispiel 1 | 55 | 80/89 | 210 | 23 | nicht mehr gießbar |
| Vergleichsbeispiel 5 | Vergleichsbeispiel 3 | 53 | 79/90 | 190 | 22 | nicht mehr gießbar |

### Beispiel 6, Vergleichsbeispiel 6

Ein Gemisch aus 276 g Polymeroxidat, 644 g entsalztem Wasser, 69 g Genapol UD 080, 7 g Diethylaminoethanol, 2 g Kaliumhydroxid (86%ig) und 2 g Natriumsulfit wurde in einem 1 l-Druckgefäß mit aufgeheizt. Nach Erreichen von 90°C Innentemperatur wurde der Rührer eingeschaltet (150 Upm). Man erhitzte weiter auf 143°C, hielt diese Temperatur unter weiterem Rühren 20 min an und kühlte den Kesselinhalt innerhalb von 40 min auf ca. 30°C ab. Die entstandene Emulsion zeigt die in Tabelle 4 aufgeführten Eigenschaften:

**Tabelle 4**

| Beispiel | Polymer oxidat | Transparenz der Dispersion (0,1%, 1 cm-Küvette) % | Glanz des Filmauftrags (Meßwinkel 20/60°) % | Viskosität der Dispersion (Durchlaufzeit 4 mm DIN-Becher) sec |
|---|---|---|---|---|
| 6 | Beispiel 2 | 63 | 80/89 | 23 |
| Vergleichs-Beispiel 6 | Vergleichs-Beispiel 2 | 48 | 78/80 | 30 |

## Patentansprüche

1. Polymeroxidate, **dadurch gekennzeichnet, dass** ein Ausgangspolymer, das ein mittels Metallocenkatalysatoren gewonnenes Polyethylen, mit einer gewichtsmittleren Molmasse größer oder gleich 50.000 g/mol darstellt, durch Umsetzung mit Sauerstoff oder Sauerstoff enthaltenden Gasgemischen oxidiert wird.

2. Polymeroxidate gemäß Anspruch 1, hergestellt aus einem Ethylenhomo-, Cooder Terpolymeren, mit 0,1 bis 20 Gew.-% von C₃-C₈-α-Olefinen.

3. Polymeroxidate gemäß Anspruch 1 oder 2, **dadurch gekennzeichnet, daß** das Ausgangspolymer bis zu 10 Gew.-% Propen oder 1-Buten enthält.

4. Polymeroxidate gemäß den Ansprüchen 1 bis 3 mit Säurezahlen zwischen 0,5 und 200 mg KOH/g und Schmelzviskositäten bei 140°C zwischen 50 und 20000 mPa.s.

5. Verfahren zur Herstellung von Polymeroxidaten gemäß den Ansprüchen 1 bis 4, **dadurch gekennzeichnet, daß** die Oxidation des Ausgangspolymers durch Luft erfolgt.

6. Verwendung von Polymeroxidaten gemäß den Ansprüchen 1 bis 4 zur Herstellung von wäßrigen Dispersionen oder als Gleitmittel zur Verarbeitung von Kunststoffen.

## Claims

1. A polymer oxidate, wherein a starting polymer, which is a polyethylene obtained using metallocene catalysts and having a weight-average molar mass above or equal to 50,000 g/mol, is oxidized by reaction with oxygen or oxygen-containing gas mixtures.

2. A polymer oxidate as claimed in claim 1, prepared from an ethylene homo-, co- or terpolymer with from 0.1 to 20% by weight of C₃-C₈ α-olefins.

3. A polymer oxidate as claimed in claim 1 or 2, wherein the starting polymer comprises up to 10% by weight of propene or 1-butene.

4. A polymer oxidate as claimed in any of claims 1 to 3 with an acid number of from 0.5 to 200 mg KOH/g and a melt viscosity at 140°C of from 50 to 20,000 mPa.s.

5. A process for preparing polymer oxidates as claimed in any of claims 1 to 4, which comprises using air to oxidize the starting polymer.

6. The use of a polymer oxidate as claimed in any of claims 1 to 4 for preparing aqueous dispersions or as a lubricant for plastics processing.

## Revendications

1. Polymères oxydés, **caractérisés en ce qu'**on oxyde un polymère de départ, qui représente un polyéthylène obtenu au moyen de catalyseurs métallocène, avec une masse molaire moyenne en poids supérieure ou égale à 50 000 g/mol, par réaction avec l'oxygène ou des mélanges de gaz contenant de l'oxygène.

2. Polymères oxydés selon la revendication 1, préparés à partir d'un homo-, co- ou terpolymère d'éthylène, avec 0,1 à 20 % en poids d'α-oléfines en C₃-C₈.

3. Polymères oxydés selon la revendication 1 ou 2, **caractérisés en ce que** le polymère de départ contient jusqu'à 10 % en poids de propène ou de 1-butène.

4. Polymères oxydés selon les revendications 1 à 3, avec des indices d'acide entre 0,5 et 200 mg KOH/g et des viscosités à l'état fondu à 140°C entre 50 et 20 000 mPa·s.

5. Procédé de préparation de polymères oxydés selon les revendications 1 à 4, **caractérisé en ce qu'**on effectue l'oxydation du polymère de départ au moyen d'air.

6. Utilisation de polymères oxydés selon les revendications 1 à 4 pour la production de dispersions aqueuses ou sous la forme d'agents lubrifiants pour la transformation de matières plastiques.
